# EUROPEAN PATENT APPLICATION

(11) **EP 3 560 934 A1**
(43) Date of publication of application: **30.10.2019**
(21) Application number: 18169579.2
(22) Date of filing: 26.04.2018
(51) Int. Cl.: C07F 5/02

(54) **PROCESS FOR THE PREPARATION OF PURE 2-CYANOPHENYLBORONIC ACID AND ESTERS THEREOF, INTERMEDIATES OF PERAMPANEL OR OF E2040**

(71) Applicant: F.I.S.- Fabbrica Italiana Sintetici S.p.A., 36075 Montecchio Maggiore (VI) (IT)
(72) Inventor: Fontana, Francesco, 22030 Longone al Segrino (IT); Di Pietro, Federico, 36100 Vicenza (IT); Nalin, Arnaldo, 37134 Verona (IT)
(74) Representative: Leganza, Alessandro

(57) **Abstract**

The present invention relates to a process for the synthesis of 2-cyanophenylboronic acid and the esters and salts thereof, which are intermediates of the synthesis of active pharmaceutical ingredients such as Perampanel or E2040, wherein impurity formation, in particular the formation of DBBN iPrketone, is reduced.

## Description

### Technical field of the invention

The object of the present invention is a process for the synthesis of 2-cyanophenylboronic acid and the esters and salts thereof, which are intermediates of the synthesis of active pharmaceutical ingredients such as Perampanel or E2040, wherein impurity formation, in particular the formation of a ketone-impurity, is reduced.

### State of the art

Perampanel is a pharmaceutical active ingredient, currently in clinical phase 3, used in the treatment of Parkinson's disease, epilepsy and multiple sclerosis.

Perampanel, having the following chemical formula 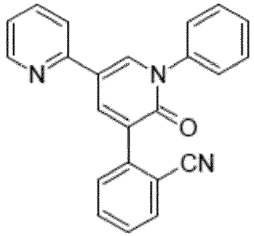 is also known as E 2007, ER 155055-90 and 3-(2-Cyanophenyl)-1-phenyl-5-(2-pyridyl)-1,2-dihydropyridin-2-one.
There are various known synthesis routes of this molecule, such as those reported in patent publications EP1300396, EP1465626, EP1772450, EP1764361 and EP1970370.
Many of the synthesis routes of this active ingredient reported in the prior art employ the key intermediate 2-(1,3,2-dioxaborinane-2-yl)benzonitrile having the following chemical formula: 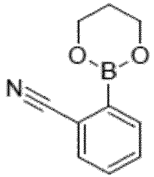 or employ the synthetic precursor thereof called 2-cyanophenylboronic acid of formula (I): 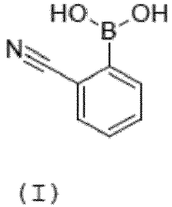 The 2-(1,3,2-dioxaborinane-2-yl)benzonitrile is indeed quantitatively prepared by simple esterification with 1,3-propanediol of the 2-cyanophenylboronic acid of formula (I), as well reported in the prior art.

There are several synthesis routes of the 2-cyanophenylboronic acid of formula (I). From an industrial viewpoint, the most interesting process to date for the preparation of this compound is the process described in patent publication US2009/0184289 wherein, starting from Benzonitrile, n-butyllithium and 2,2,6,6-tetramethylpiperidine at -78°C are employed to generate the ortho-anion which, by reacting with triisopropoxyborane and subsequent acid hydrolysis of the diisopropyl ester of the 2-cyanophenylboronic acid obtained, gives the desired product. The highest molar yield reported is 71%. This process appears to be an improvement with respect to the process described in the Organic Letters of 2001, Vol. 3, no.10, pages 1435-1437. This process however, has obvious disadvantages, such as the need to operate in cryogenic conditions (T = -78°C) using special equipment, while obtaining the product in relatively low molar yield. The product also contains an impurity typical of that synthetic process.
The Journal of Organometallic Chemistry (2002), 653 (1-2), 269-278 reports the synthesis of the pharmaceutical active ingredient called E2040 by means of the compound of formula (I) or an ester thereof, of which there is mention and description of and the preparation of the key intermediate 2-(1,3,2-dioxaborinane-2-yl)benzonitrile by means of esterification with 1,3-propanediol by the compound of formula (I). The preparation of the compound of the formula (I) is carried out by ortho-bromobenzonitrile with a halogen/lithium exchange and attachment of the anion onto the trimethoxyborane, followed by hydrolysis of the dimethyl ester. A yield of about 50% is reported, which for industrial purposes is of little interest.

WO 2014/023576 A1 discloses a process for the synthesis of 2-cyanophenylboronic acid and the esters and salts thereof, which are intermediates of the synthesis of active pharmaceutical ingredients such as Perampanel or E2040. However, the product could contain some impurities which are removed by extraction techniques. Therefore, further purification steps are contemplated in order to obtain a purer product. In particular, in the examples the amount of Lithium chloride complex Grignard reagent is 1.35 equiv. (see example 1) and 1.30 equiv. (see example 2), respectively.

### Summary of the invention

Therefore, the problem addressed by the present invention is to make available a process for the preparation of 2-cyanophenylboronic acid of formula (I) and the esters thereof: 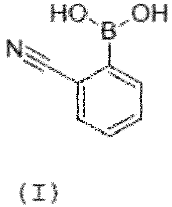 wherein impurity formation, in particular the formation of a ketone-impurity, is reduced, thus overcoming the above-reported drawbacks with reference to the prior art.

This problem is resolved by a synthesis process of the 2-cyanophenylboronic acid of formula (I) or of an ester thereof as outlined in the accompanying claims, the definitions of which form an integral part of the present description.

Further characteristics and advantages of the process according to the invention will become apparent from the below-reported description of preferred embodiments, given by way of a non-limiting example.

### Brief description of the drawings

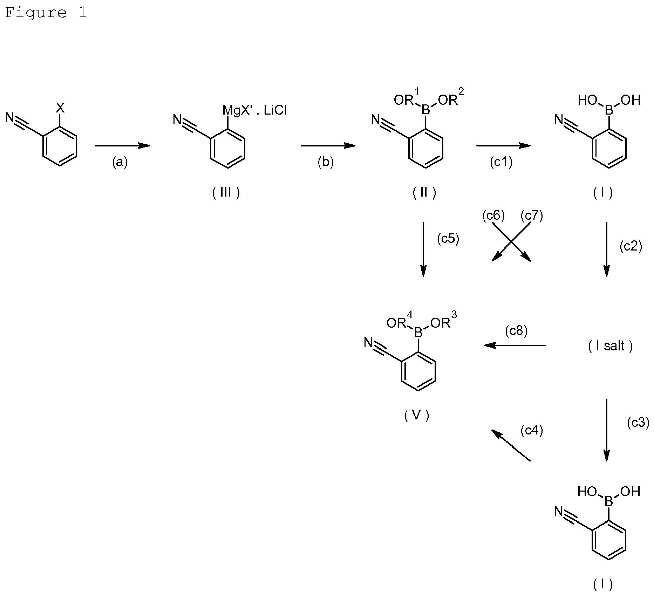

Fig. 1 shows a summary and explanatory synthesis pathway of the synthesis steps and variants of the process of the present invention.
Fig. 2 shows an NMR spectrum of ketone-impurity of formula IIa.

### Detailed Description of the invention

According to a first aspect, the present invention relates to a process for the preparation of an ester of 2-cyanophenylboronic acid of formula (II): 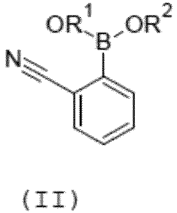 wherein R1 and R2 are independently linear or branched C1-C6 alkyl groups or are joined to form a cycle containing between 1 and 6 possibly substituted carbon atoms,
wherein the amount of ketone-impurity of formula (Ia) 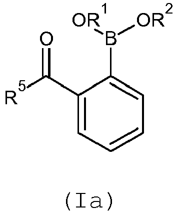 in the compound of formula (II) is lower than about 1,0 percent weight on weight compared to the compound of formula (II) or a salt thereof and wherein
R1 and R2 are independently linear or branched C1-C6 alkyl groups or are combined to form a cycle comprising between 1 and 6 possibly substituted carbon atoms and
R5 is selected from C1-C4 alkyl, preferably iso-propyl, t-butyl and sec-butyl, even more preferably R3 is iso-propyl; comprising the following steps:
(a) conversion of a 2-halogenbenzonitrile of formula (IV): 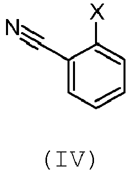 wherein X is selected from chlorine, bromide and iodine,
   in a 2-cyanophenyl magnesium halide lithium chloride complex of formula (III): 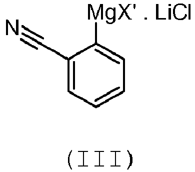 wherein X' is selected from chlorine, bromine and iodine and wherein said step a) is carried out by means of a lithium chloride complex Grignard reagent of formula

   R5MgX'LiCl

   wherein R5 is selected from C1-C4 alkyl and X' is selected from chlorine, bromine and iodine,
(b) conversion of the compound obtained in step (a) to give the compound of formula (II);
characterized in that the amount of lithium chloride complex Grignard reagent is comprised among 1,15 and 1,25 molar equivalents.

With reference to the Lithium chloride complex Grignard reagent used in step a) according to the present invention, it is preferably selected from isopropylmagnesium chloride lithium chloride complex, t-butylmagnesium chloride lithium chloride complex or sec-butylmagnesium chloride lithium chloride complex.

Advantageously, the Applicant has surprisingly found that the use of such a lithium chloride complex Grignard reagent in the amount as indicated above (molar equivalent range 1,15-1,25), allows to reduce impurity formation, in particular the formation of a ketone-impurity in an amount lower than the above-mentioned value.

Furthermore, in order to successfully carry out step (a) starting from the substrate of formula (IV), it is essential to use a lithium chloride complex Grignard reagent as described above since the possible use of a normal Grignard reagent does not lead to even small amounts of the corresponding boronic ester. A normal Grignard reagent indeed allows the preparation of the corresponding Grignard, however since it is not a lithium chloride complex, it does not react like one to form the boronic ester of formula (II). From here, the process of the present invention passes through the Grignard reagent intermediaries of formula (III) which are lithium chloride complexes which are the only ones to provide the compound of formula (II).

An additional advantage of the process according to the present invention is that the formation of the Grignard reagent (step (a)) is performed between 0 and 5°C, and since step (b) is carried out starting from this temperature, both the use of cryogenic conditions and equipment typical of the other processes of the prior art, and the need to perform long thermal ramps on industrial-scale production are avoided. It being neither necessary nor practical to isolate the intermediate Lithium chloride complex Grignard reagent, it is thus possible to use a one-pot reaction for the entire process, even by always operating at the same temperature, for example, preferably between 0°C and 5°C.

Alternatively, step (b) can also be fully or partially performed at a temperature between 20 and 25°C.

According to a preferred embodiment of the present invention, trimethylborate (TMB) addition temperature is between -30 and -20, more prefeferably between -27 and -23, even more preferably -25 °C.

If the 2-halogenbenzonitrile of formula (IV) has a halogen group X which differs from the halogen of the lithium chloride complex Grignard reagent employed for the reaction, the corresponding product of formula (III) will have a group X' that could be the same starting 2-halogenbenzonitrile or X' could be the halogen of the Grignard reagent used or a mixture of compounds could be obtained with the two different halogens. In all cases, the reaction products are to be construed as being part of the present invention.

It has also been surprisingly found that the molar yield of the above-described process comprising steps (a) and (b) to give the compound of formula (II) is 80-85% and thus much greater than the processes of the prior art.

The process of the present invention can comprise a further (c1) step of conversion of the compound of formula (II) obtained in step (b) in the 2-cyanophenylboronic acid of formula (I):

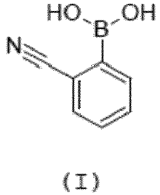

This step (c1) can be carried out with water or acidic water and is quantitative whereby the yield of the entire process to obtain the 2-cyanophenylboronic acid of formula (I) is 80-85%.

Some conditions for performing step (c1), for example by means of acid hydrolysis of the ester, are also described in US2009/0184289.

The 2-cyanophenylboronic acid of formula (I) obtained from step (c1) can be further converted by means of the further step (c2) in an organic or inorganic salt, in the 2-cyanophenylboronic acid of formula (I).

This organic salt can present as counter-ion a primary, secondary or tertiary aliphatic or aromatic amine. Examples of organic counter-ions are triethylamine, dimethylamine, methylamine, benzylamine, aniline, etc. The inorganic salts of the 2-cyanophenylboronic acid of formula (I) comprise as counter-ions ammonium and the cations of alkaline elements (for example sodium, lithium, potassium, caesium, etc.) and alkaline-earth elements (for example calcium, magnesium, strontium, barium, etc.). Preferred are the sodium, potassium and magnesium salts of the 2-cyanophenylboronic acid of formula (I).

It is evident that if the counter-ion cation is monovalent, the salt will consist of two cations while if it is divalent, the salt will have a single counter-ion atom, i.e. it will have stoichiometry (1:1).

The process of the present invention can comprise the further direct conversion step (c6) of the compound obtained in step (b) in an organic or inorganic salt of the 2-cyanophenylboronic acid of formula (I).

This is achieved for example by placing in contact the organic solution containing the compound of formula (II) with an aqueous solution at pH > 9 containing soda or potash for example. There is thus obtained the corresponding salt in aqueous phase.

The process of the present invention can comprise a further conversion step (c3) of the compound obtained in step (c2) or (c6) in the 2-cyanophenylboronic acid of formula (I).

This step can be realised for example by acidifying an aqueous solution containing the salt obtained in step (c2) or (C6) and, possibly, extracting the product in a suitable organic solvent or by isolating the product by means of precipitation.

The process of the present invention can comprise a further conversion step (c4) of the compound obtained in step (c3) in an ester of the 2-cyanophenylboronic acid formula (V): 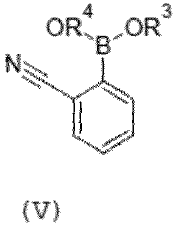 wherein R3 and R4 are independently linear or branched C1-C6 alkyl groups or are combined to form a cycle containing 1 to 6 possibly substituted carbon atoms.

This esterification step, like step (c7), can be performed employing conditions of the prior art such as those described in the Journal of Organometallic Chemistry (2002), 653(1-2), 269-278.

The process of the present invention can further and alternatively comprise a further conversion (c8) step of the compound obtained in step (c2) or (c6) in an ester of the 2-cyanophenylboronic acid of formula (V): 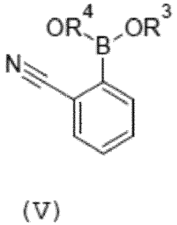 wherein R3 and R4 are independently linear or branched C1-C6 alkyl groups or are combined to form a cycle containing 1 to 6 possibly substituted carbon atoms.

Although in the formula (II) and in formula (V) the R substituent groups have different names, i.e. R1 and R2 versus R3 and R4, it should be noted that the meaning of the compound of the ester of the 2-cyanophenylboronic acid of formula (II) is the same as that of formula (V).

In one preferred embodiment, the process of the present invention allows the preparation by means of steps (a) and (b) or by means of steps (c4) or (c8) of the 2-(1,3,2-dioxaborinane-2-yl)benzonitrile compound of the following formula:

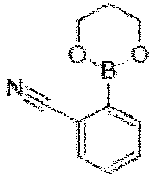

In one preferred embodiment, the process of the present invention, in all the variants thereof, employs in step (a) the 2-bromobenzonitrile, i.e. the compound of formula (IV) wherein X is bromine.

The process according to the present invention, in all the variants or alternatives thereof, provides for step (b) to be carried out by means of a compound of formula X1-B(OR1) (OR2)where X1 is selected from halogen and OR wherein R is a linear or branched C1-C6 alkyl group and where R1 and R2 are independently linear or branched C1-C6 alkyl groups or are combined to form a cycle containing between 1 and 6 possibly substituted carbon atoms.

Preferably, step (b) is carried out with a compound wherein X1 is selected from chlorine, OMe and OiPr and R1 and R2 are selected from Methyl, isopropyl or form a cycle having 3 carbon atoms not substituted.

Even more preferred as reagents for achieving step (b) are trimethyl borate or triisopropylborate.
The process of the present invention provides for step (c2) to be carried out by extraction of an organic solution of the compound of formula (I) with an aqueous solution at pH greater than 9 comprising an organic or inorganic base, wherein the organic or inorganic salt of the 2-cyanophenylboronic acid of formula (I) thus generated is then to be found.

Preferably, the pH of the aqueous solution is between 10 and 14.

Step (b) indeed generally terminates with the obtaining of the compound of formula (II) in an organic solution consisting of one or more organic solvents, such as for example Toluene or mixtures of Toluene and THF. This solution can be treated according to step (c6) or according to step (c2) (by means of hydrolysis according to step (c1)) with a basic aqueous solution (at pH greater than 9) into which the product of formula (I) is transferred in the form of salt. The organic phase having been exhausted, it is thus eliminated. The aqueous phase can then be washed with some organic solvent. The aqueous phase containing the compound of formula (I) in the form of salt can thus be re-acidified, according to step (c3), thus obtaining the compound of formula (I) in the form of acid that can be separated from the aqueous phase by precipitation or by means of extraction with an organic solvent. This solvent can preferably be the same solvent from which the product was extracted by means of the basic aqueous solution. Alternatively, ethyl acetate, or better isopropyl acetate, can be conveniently used. These steps (C2) and (C3) allow the purity of the compound of formula (I) to be increased from typical values for the crude product obtained from step (c1) from 82-83% to more than 96-98% (purity measured with HPLC (A/A%).

It is important to highlight that, if the 2-cyanophenylboronic acid of formula (I) is not isolated and preparation of the compound of formula (V) takes place without first carrying out step (c2) and possibly step (c3), for example by directly performing step (c7), the product of formula (V) does not crystallize and tends to remain as, often sticky, oil. This is probably due to the presence of the impurities that are on the other hand removed with the organic phase exhausted by means of the basic extraction. In order to obtain the compound of formula (I) with a degree of sufficient purity to allow isolation of the compound of formula (V) in solid form, the purification step (c2) by means of basic extraction of the product is thus essential.

By including steps (c2) and (c3) of purification by means of basic treatment, i.e. by obtaining the salt of the compound of formula (I) and subsequent re-acidification and extraction in organic solvent, a product of formula (V) is obtained that is easily filterable and certainly has a greater degree of purity. In addition, the process of the present invention allows 2-cyanophenylboronic acid of formula (I) with a level of purity (HPLC (A/A%)) greater than 98% to be obtained.

The skilled person knows that, generally speaking, the arylboronic acids, especially those electron poor, are subjected to proto deboration reaction when they are treated under basic conditions. Evidences of this general knowledge are reported in "Boronic Acids" "preparation, Applications, Organic Synthesis and Medicine" edited by Dennis G. Hall for Wiled -VCH Verlag GmbH (2005), at pag. 14. Thus, it is surprising that, vice-versa, preparing the organic or inorganic salt of the 2-cyanophenylboronic acid of formula (I), according o the steps (c1) and (c2), or, alternatively according to the step (c6), thus treating 2-cyanophenylboronic acid or an ester thereof at pH greater than 9, and preferably higher than 10, allow the preparation of a purer product so that it can be isolated as solid.

The process according to the present invention provides for steps (a) and/or (b) and/or (c2) to be carried out in an organic solvent selected from Toluene, Tetrahydrofuran (THF), methyl-tetrahydrofuran or mixtures thereof. Preferably, steps (a) and (b) are carried out in Toluene or mixtures of Toluene and THF.

It is preferable to one-pot synthesize the ester of formula (V) since the 2-cyanophenylboronic acid of formula (I), according to what is reported in the Journal of Organometallic Chemistry (2002), 653 (1-2), 269-278, could be a relatively unstable substance and not conveniently usable for productions on industrial scale.

To this end, as a variant, once there has been obtained, with the process of the invention, the compound of formula (II), for example wherein R1 and R2 are both methyl or isopropyl, the trans-esterification step (c5) can be performed, using for such purposes for example the teachings of the Organic Letters of 2001, Vol. 3, no.10, pages 1435-1437.

Step (a) according to the present invention thus allows the preparation of the 2-Cyanophenyl magnesium halide lithium chloride complex of formula (II): 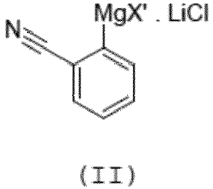 wherein X' is selected from chlorine, bromine and iodine, by means of the 2-halogenbenzonitrile conversion of formula (III) : 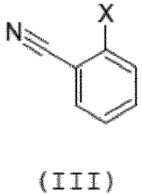 wherein X is selected from chlorine, bromine and iodine.

The process of the present invention allows the preparation of 2-cyanophenylboronic acid of formula (I) or a salt thereof: 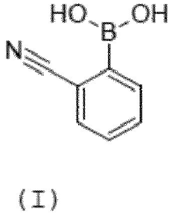 by means of a process comprising the extraction of an organic solution of the compound of formula (I) with an aqueous solution at pH greater than 9 comprising an organic or inorganic base wherein the organic or inorganic salt of the 2-cyanophenylboronic acid of formula (I) thus generated is then to be found.

The process of the present invention can be employ as intermediate an organic or inorganic salt of the 2-cyanophenylboronic acid of formula (I): 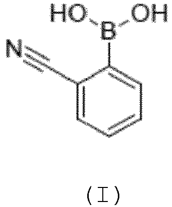 preferably selected from sodium salt, potassium salt and magnesium salt.

The halide of 2-cyanophenyl magnesium halide lithium chloride complex of formula (II) and the organic or inorganic salt of the cyanophenylboronic acid of formula (I) are thus used for the preparation of 2-cyanophenylboronic acid of formula (I) or of an ester thereof of formula (II) or (V) or for the preparation of Perampanel or of E2040.

The compound of formula (I) obtained with the process according to the present invention can be possibly isolated according to known organic synthesis techniques.

According to a preferred embodiment, the step a) of the process of the invention, is preferably carried out within a range of temperature comprised between -25°C and -15°C and more preferable, between -22°C and -18°C, being about -20°C the best temperature. It has been indeed surprisingly discovered that performing the step a) in a temperature range comprised between -25°C and -15°C the molar yield increase dramatically. When step a) is performed at this temperature, as in Example 2, the molar yield of the final isolated 2-(1,3,2-dioxaborinane-2-yl)benzonitrile increase until 73%, versus a 44.8% obtained performing the step a) at 0 - 5°C (see example 1). In general terms, operating step a) -25°C / - 15°C instead at 0°C / 5°C the isolated molar yield of 2-(1,3,2-dioxaborinane-2-yl)benzonitrile increases from 40-45% to 73-75%. Although to perform the reaction of step a) at 0-5°C is already an improvement either in terms of molar yield or purity in respect of performing this reaction at 20-25°C, performing this reaction at -25°C / - 15°C, and preferably at -22°C / -18°C or at about -20°C, provides exceptional results.

Operating the step a) in the preferred range of -25°C / - 15°C allows a dramatic increasing of molar yield (the reaction of step a) is thus almost quantitative (complete conversion with very few impurities) and the molar yield of the final 2-(1,3,2-dioxaborinane-2-yl)benzonitrile reaches 73%) and is also observed an increase of the purity of the final product (from 99.7% of Experiment 1 to 99.9% of Experiment 2). This is mainly due to the fact that performing step a) at -25°C / - 15°C the formation of the dimeric impurity having the following structure: 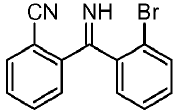 is completely avoided, even operating at higher concentration (which should favourite the formation of this impurity). This impurity is in fact particularly critical for this process since once it is formed, it is not eliminated during the synthesis and is subjected to the same chemical transformations as the other intermediates, thus generating the final impurity having the following structure:

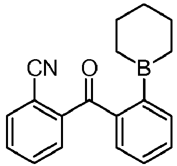

The removal of the above impurity of the 2-(1,3,2-dioxaborinane-2-yl)benzonitrile is indeed particularly difficult and decreases the level of purity of the 2-(1,3,2-dioxaborinane-2-yl)benzonitrile itself, as well as of the final pharmaceutical substance Perampanel or E2040.

Performing the step a) at -25°C / - 15°C and preferably at -22°C / -18°C, the reaction is much more clean, i.e. there are much less impurities, than performing the reaction at 0-5°C or, worse at 20-25°C. This also contributes to the achieving of higher molar yields.

Although the increase of the chemical purity could appear modest, this not the case, vice-versa it is actually a valuable improvement since, as known by the person of the sector, passing from 99.7% to 99.9% of chemical purity is difficult and requires typically a large amount of experimental work.

According to a preferred embodiment, the step a) of the process of the invention is carried out within a range of temperature comprised between -25°C and -15°C, more preferable at -22°C and -18°C, and the process comprises the conversion step (c1) of the compound obtained in step (b) in the 2-cyanophenylboronic acid of formula (I): 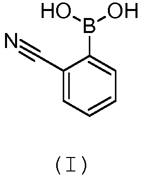 and comprises the conversion step (c2) of the compound obtained in step (c1) in an organic or inorganic salt of the 2-cyanophenylboronic acid of formula (I), or, alternatively to the steps (c1) and (c2), the process comprises the direct conversion step (c6) of the compound obtained in step (b) in an organic or inorganic salt of the 2-cyanophenylboronic acid of formula (I) which is then converted in the ester of 2-cyanophenylboronic acid of formula (V): 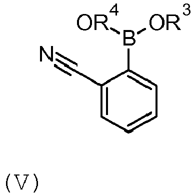 wherein R3 and R4 are independently C1-C6 linear or branched alkyl groups or are joined to form a cycle containing between 1 and 6 possibly substituted carbon atoms, through the step (c8) or the steps (c3) and (c4). This preferred embodiment allows the preparation of esters of 2-cyanophenylboronic acid of formula (V) which can be isolated as solid and having high chemical purity. The high chemical purity of the product is indeed reached thank to the temperature range of -25°C and -15°C of step a) and thank to the purification carried out through the preparation of an organic or inorganic salt of the 2-cyanophenylboronic acid of formula (I) which allows the isolation of the product as a solid, instead as an oil, thus increasing significantly the chemical purity.

According to a preferred embodiment of the invention, a process for the preparation of the 2-(1,3,2-dioxaborinane-2-yl)benzonitrile is summarized in the synthesis pathway included in the examples 1 and 2 and comprises the sequences of steps (a), (b), (c1), (c2), (c3) and (c4) as well as the intermediates as shown in such synthesis pathway.

According to a further aspect, the present invention relates to a process for the synthesis of a ketone-impurity of formula (Ia) 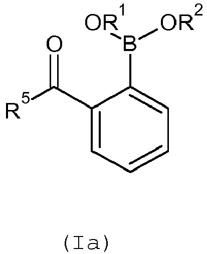 wherein
R1 and R2 are independently linear or branched C1-C6 alkyl groups or are combined to form a cycle comprising between 1 and 6 possibly substituted carbon atoms;
R5 is selected from C1-C4 alkyl, preferably iso-propyl, t-butyl and sec-butyl, even more preferably R5 is iso-propyl; said process comprising the steps of:
   i) subjecting the compound of formula 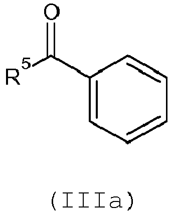 to an Orto-selective borylation to obtain a boronic acid derivative of formula (IVa) 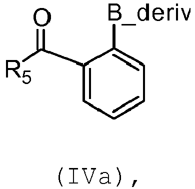 wherein *deriv.* is selected from pinacolate (Pin), (-) pinanediolate, hexylene glycolate, catecholate, neopentyl glycolate and dioxaborinane,
      in the presence of at least one diboron compound, preferably bis(pinacolato)diboron, bis[(-)pinanediolate]diboron, bis(hexylene glycolate)diboron, bis(catecholate)diboron, bis(neopentyl glycolate)diboron or 2,2'-bi-1,3,2-dioxaborinane, even more preferably bis(pinacolato)diboron, and at least one metal-based catalyst selected from a Ir-, Rh- or Ru-based catalyst,
   ii) hydrolyzing said boronic acid derivative of formula (IVa) to obtain a boronic acid of formula (Va) 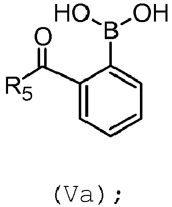
   iii) subjecting the obtained boronic acid of formula (Va) to esterification thus obtaining the ketone-impurity of formula (Ia). Preferably, the ketone-impurity has formula (IIa) 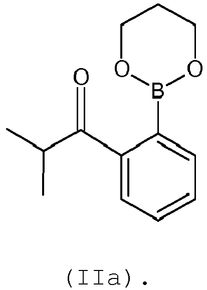 Furthermore, according to a preferred aspect, in step i), the Orto-selective borylation is carried out also in the presence of at least one arsine, preferably triphenylarsine, or phosphine.

With reference to the ketone-impurity formation, due to the use of the specific lithium chloride complex Grignard reagent used, said ketone-impurity has the following formula (Ia) 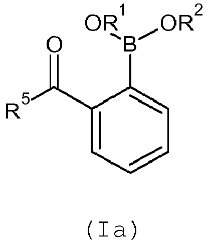 wherein R⁵ depends on the lithium chloride complex Grignard reagent used in step a). The synthesis and characterization of the ketone-impurity are reported in the following example 3. Such impurity can be recovered from DBBN crystallization mother liquid after chromatographic purification.

According to a further aspect, the present invention relates to a ketone-impurity of formula (Ia) 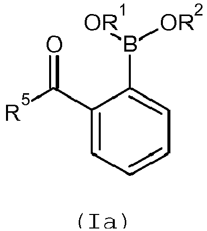
wherein, R1 and R2 are independently linear or branched C1-C6 alkyl groups or are combined to form a cycle comprising between 1 and 6 possibly substituted carbon atoms;
R5 is selected from C1-C4 alkyl group, preferably iso-propyl, t-butyl and sec-butyl, even more preferably R5 is iso-propil. As reported above, R5 is related to the lithium chloride complex Grignard reagent used in step a). For example, when the lithium chloride complex Grignard reagent is isopropilmagnesium chloride lithium chloride complex, then R⁵ is iso-propil.

Preferably, the ketone-impurity has formula (IIa) 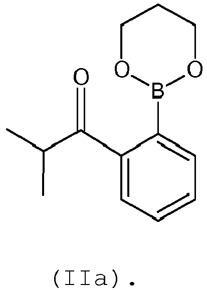 According to a further aspect, the present invention relates to the use of a ketone-impurity of formula (Ia) 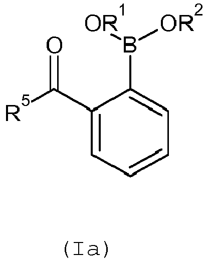 wherein,
R1 and R2 are independently linear or branched C1-C6 alkyl groups or are combined to form a cycle comprising between 1 and 6 possibly substituted carbon atoms;
R5 is selected from C1-C4 alkyl,
as reference standard or reference marker for detecting the presence of said impurity in the ester of 2-cyanophenylboronic acid of formula (II): 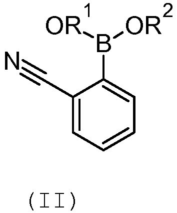 wherein R1 and R2 are independently linear or branched C1-C6 alkyl groups or are joined to form a cycle containing between 1 and 6 possibly substituted carbon atoms. Preferably, the ketone-impurity has formula (IIa)

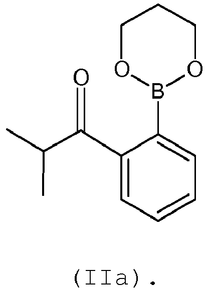

According to a further aspect, the present invention relates to a composition comprising an ester of 2-cyanophenylboronic acid of formula (II): 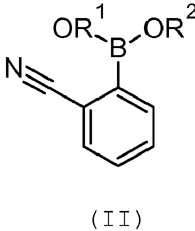 and a ketone-impurity of formula (Ia) 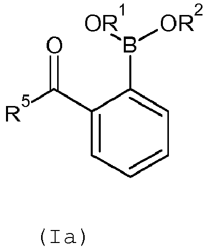 wherein the ketone-impurity is present in an amount lower than about 1.0 percent weight on weight compared to the compound of formula (II) or a salt thereof. Preferably, the ketone-impurity has formula (IIa)

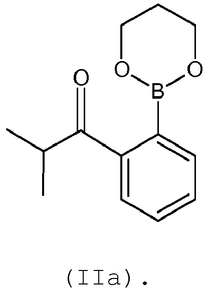

### EXPERIMENTAL SECTION

### Example 1 - Synthesis of 2-(1,3,2-dioxaborinane-2-yl)benzonitrile

### Synthesis pathway

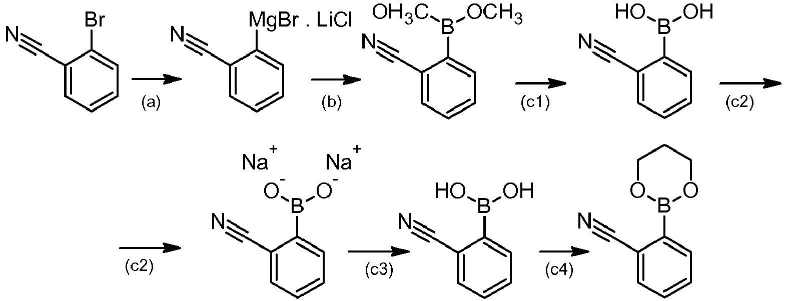

Into a previously dried and inertised flask under nitrogen flow, fitted with a thermometer, reflux and a dropping funnel, are loaded 50.0 g (1.0 equiv.) of 2-bromobenzonitrile and 250 ml (5 V) of anhydrous Toluene. It is cooled at 0-5°C and there are added, in 0.5 hours and maintaining the T at 0-5°C, 269.0 g (1.35 equiv.) of Isopropylmagnesium chloride/lithium chloride complex 1.3 M (about 20% wt/wt) in THF. It is stirred at T 0-5°C and stirred for 1.5 hours. The conversion in checked in HPLC. If the reaction is complete there are added in 0.25 hours at 0-5°C, 57.0 g = 61.3 ml (2 equiv.) of trimethylborate (d= 0.932 g/ml). It is stirred at 0-5°C for 0.25 hours and then allowed to warm to 20-25°C and stirred for 0.25 hour. The conversion is checked in HPLC. If the reaction is complete, it is cooled to 0-5°C and there is added at 0-10°C a solution of hydrochloric acid 0.1 M prepared by mixing 5 ml of hydrochloric acid 32% (10.17 M) and 495 ml (9.9 V) of purified water. It is left under agitation 0.5 h at 20-25°C and then the pH, which must be less than 5, is checked. If the pH is not less than 5, sufficient 10% HCl is added to correct the pH. It is stirred 0.25 hours and the phases are separated. The aqueous phase is again extracted with 250 ml (5 V) of Toluene. The organic phases, which are washed with 250 ml (5 V) of a saturated sodium chloride solution, are recombined. The phases are separated and the organic solution is sampled for HPLC checking. The organic phase is extracted with a soda solution 1 M (the product passes into aqueous phase), prepared by mixing 25 ml (0.5 V) of caustic soda solution 30% and 225 ml (4.5 V) of purified water. Before performing separation, check the pH which must be greater than 10. There is separation of the organic phase which is again re-extracted with caustic soda solution 1 M, prepared by mixing 25 ml (0.5 V) of caustic soda solution 30% and 225 ml (4.5 V) of purified water. Before performing separation, the pH, which must be greater than 10, is checked. There is separation of the organic phase which is again re-extracted with 1 M caustic soda solution, prepared by mixing 25 ml (0.5 V) of caustic soda solution 30% and 225 ml (4.5 V) of purified water. Before performing separation, the pH, which must be greater than 10, is checked. The aqueous phases which are washed with 2x100 ml (2x2 V) of ethyl acetate are recombined. The organic phase is discarded. The pH of the aqueous phase (containing the reaction product) is corrected with hydrochloric acid to a final pH of 6-7. The aqueous phase is extracted with 2x250 ml (2x5 V) of Ethyl acetate. The product passes into the organic phase. The organic phases are recombined and washed with 250 ml (5 V) of saturated solution of sodium chloride. The phases are separated and the organic solution is sampled for HPLC checking. There are added to the organic phase 23 g = 21.8 ml (1.1 equiv.) of 1,3-propanediol (d= 1.0597 g/ml). It is stirred at 20-25°C for 2 h and the conversion in checked in TLC. If the reaction is complete, the aqueous phase is separated (water is generated during the reaction) and is concentrated to residue at T_{bath} 35-40°C. It is taken up with 250 ml (5 V) of Dichloromethane and the organic phase is washed with 50 ml (1.0 V) of purified water. It is concentrated to residue in T_{bath} 35-40°C. 150 ml (3.0 V) of n-Hexane are slowly added under agitation. The product crystallizes. It is stirred at 20-25°C for 0.5 h and then at 0-5°C for 0.5 h. It is filtered by washing with 50 ml (1.0 V) of n-Hexane pre-cooled to 0-5°C. It is vacuum dried at 20-25 °C for at least 8 h. There are obtained 23.0 g of 2-(1,3,2-dioxaborinane-2-yl)benzonitrile equal to a molar yield from 2-bromo benzonitrile of 44.8%. HPLC purity (A/A% 99.7%.). Example 2 - Synthesis of 2-(1,3,2-dioxaborinane-2-yl)benzonitrile - Effect of the Temperature in step a) on molar yield and chemical purity.

### Synthesis pathway

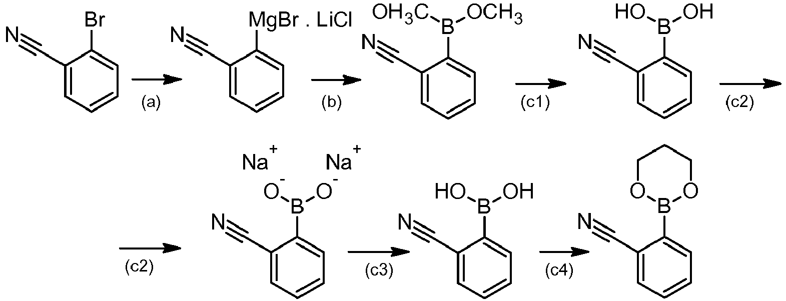

Into a previously dried flask, equipped with a thermometer, condenser and dropping funnel, under nitrogen flow, 100.0 g (1.00 equiv.) of 2-bromobenzonitrile and 750 ml (7.5 V) of anhydrous Toluene are charged. The mixture is cooled at -22/-18°C and 519.0 g (1.30 equiv.) of Isopropylmagnesium chloride/lithium chloride complex 1.3 M (about 20% wt/wt) in THF are added keeping the T at -22/-18°C, over about 1.5 h. The reaction is stirred at -22/-18°C for additional 4 h then the conversion in checked by HPLC. When the reaction is complete, 125.6 g (2.20 equiv.) of trimethylborate are added keeping the T at -22/-18°C over about 0.5 h. Once the addition is complete, cooling is removed and the reaction is warmed to 20-25 °C and stirred for about 0.5 h. The conversion is checked by HPLC. When the reaction is complete, the mixture is cooled to 0-5°C and a solution of 0.1 M hydrochloric acid, prepared by mixing 10 ml of 32% hydrochloric acid (10.17 M) and 990 ml (9.9 V) of purified water, is added at 0-20°C. After stirring 0.25 h at 20-25°C the pH is modified to 3-4 with appropriate amount of 32% hydrochloric acid. The layers are then separated. The aqueous phase is extracted again with 500 ml (5 V) of Toluene. The organic phases are recombined and washed with 500 ml (5 V) of a saturated sodium chloride solution. The organic layer is extracted at 20-25°C with 0.1 M sodium hydroxide solution, prepared by mixing 5 ml (0.05 V) of 30% sodium hydroxide solution and 495 ml (4.95 V) of purified water (the product passes into the aqueous phase). Before performing layer separation the pH is modified to 10-11 with the appropriate amount of 30% sodium hydroxide solution. Layers are separated and the organic layer is extracted twice with 0.1 M sodium hydroxide solution, prepared by mixing 5 ml (0.05 V) of 30% sodium hydroxide solution and 495 ml (4.95 V) of purified water. The pH is corrected to 10-11 if needed before each layer separation. The aqueous phases are recombined and are washed with 2x300 ml (2x3 V) of Isopropyl acetate. The organic phase is discarded. The pH of the aqueous phase (containing the reaction product) is corrected with hydrochloric acid to a final pH of 3-4. The aqueous phase is extracted with 2x500 ml (2x5 V) of Isopropyl acetate. The product passes into the organic phase. 46.0 g (1.1 equiv.) of 1,3-propanediol are then added to the organic solution and the mixture stirred at 20-25°C for 2 h. The conversion in checked by TLC. When the reaction is complete, the aqueous phase is separated (water is generated during the reaction) and the organic layer is concentrated to residue at T bath 35-40°C. The residue is dissolved with 500 ml (5 V) of Dichloromethane and the organic phase is washed with 100 ml (1.0 V) of purified water. Layers are separated and the organic phase is concentrated to small volume in T bath 35-40°C. 100 ml (1.0 V) of n-Heptane are added keeping boiling under vacuum at T bath 35-40°C and the mixture is concentrated to small volume. Then, 5 ml of Isopropanol and 300 ml (3.0 V) of n-Heptane are slowly added under vigorous stirring. The product crystallizes out. The slurry is stirred at 20-25°C for 0.5 h and then at 0-5°C for at least 2 h. The mixture is filtered and washed with 100 ml (1.0 V) of n-Heptane pre-cooled to 0-5°C. After vacuum drying at 20-25 °C for at least 8 h 75.1 g of 2-(1,3,2-dioxaborinane-2-yl)benzonitrile equal to a molar yield from 2-bromo benzonitrile of 73%. HPLC purity (A/A% 99.9%).

In particular, it will be appreciable how the employing of the conditions object of the present invention allow the 2-cyanophenylboronic acid of formula (I) or an ester thereof to be obtained with good yields, high purity, in a single step and avoiding the use of cryogenic conditions and equipment.

### Example 3 - Synthesis of compound of formula (II)

In order to give evidence the relevance of the amount of lithium chloride complex Grignard reagent in reducing the formation of the ketone-impurity, 22 experiments were carried out in accordance with the synthesis process reported below and following Table 1 shows the parameters (*Grignard molar Eq:* molar equivalent of Grignard reagent adding; *T add Grignard:* Temperature adding Grignard; Vol toluene: volume of toluene used to dissolve 2-Bromobenzenitril; *Eq TMB:* molar equivalent of trimethyl borate; and *T add TMB:* temperature adding of Timethyl borate) used in each experiment carried out.

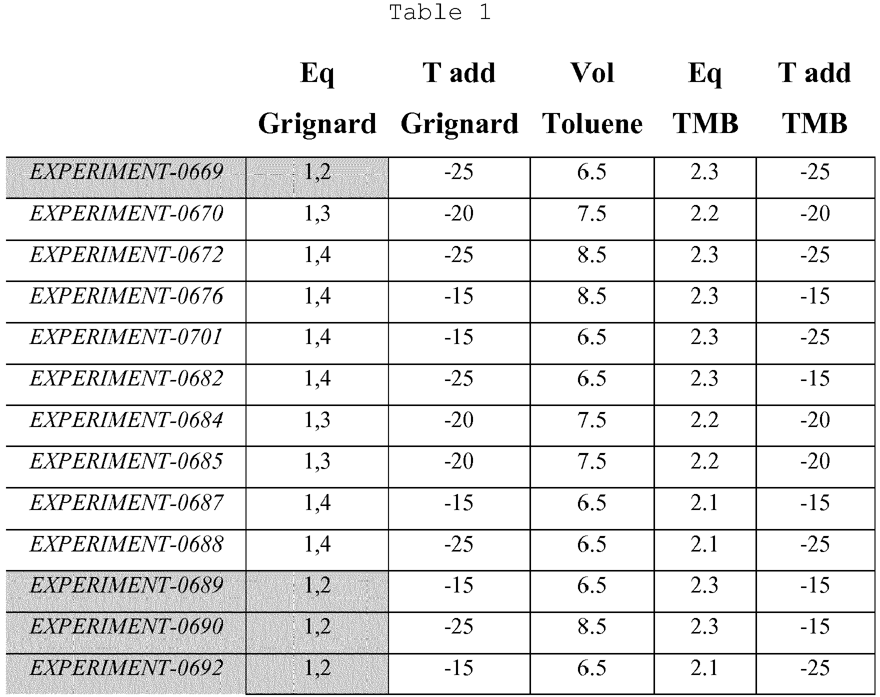

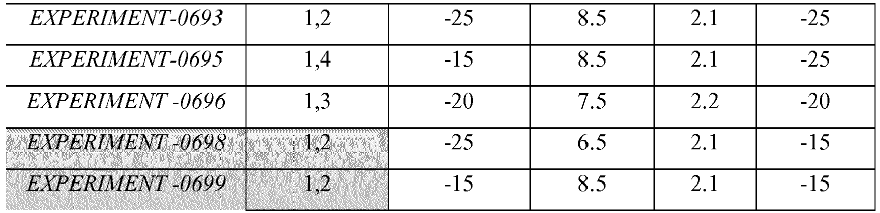

A flask containing 2-bromebenzonitrile (12 g, 1 eq) was dissolved in a specific volume of anhydrous toluene with stirring at a specific temperature (as reported in table 1). Molar equivalents of iPrMgClLiCl (as reported in table 1) were changed over 90 minutes. The solution was stirred for 5 hours, after which one portion was withdrawn to be analysed with A030 method (raw). Molar equivalents of B(OMe)3 (as reported in table 1) were charged to the previous solution in one hour at a specific temperature (as reported in table 1). The solution was stirred for 30 minutes, and then one portion was withdrawn for analysis with A040 method (with rewashing). Analytical results are reported in the following table 2.

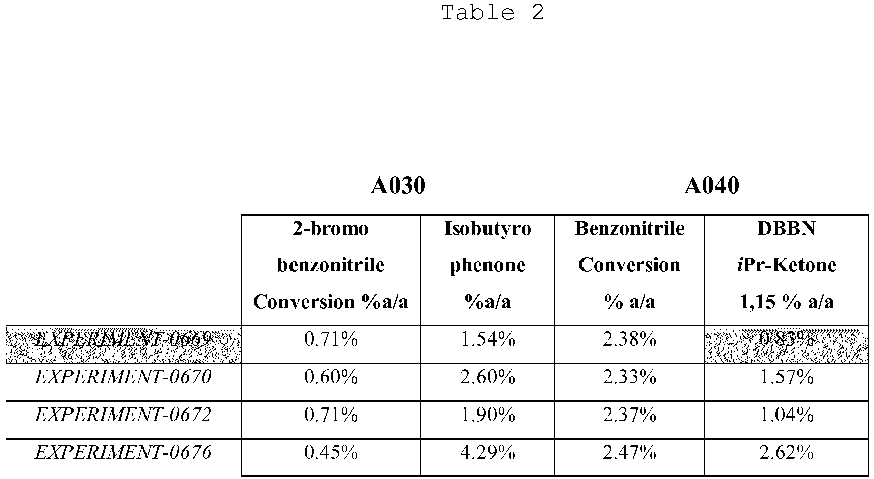

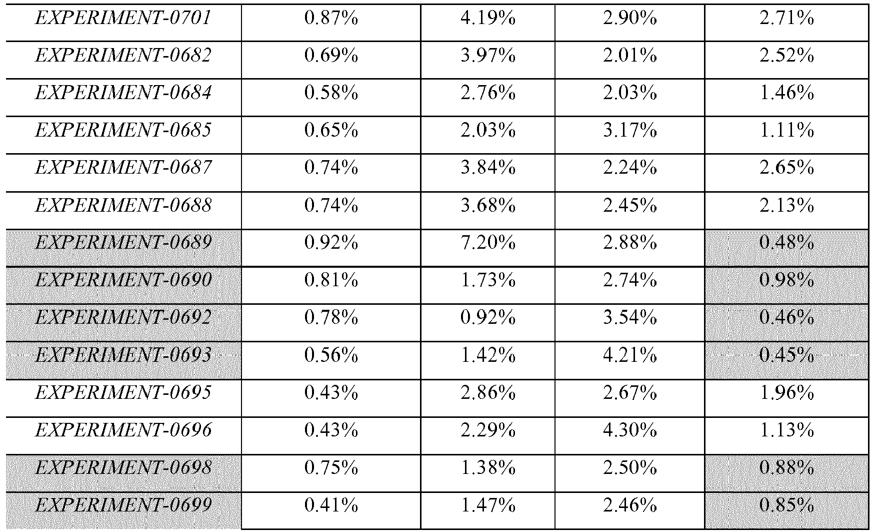

The influence of the amount of Turbo Grignard as well as that of the concomitant addition temperature is represented in the graphic below. The addition temperatures of Turbo Grignard seems to have a stronger impact on ketone-impurity having RRT (relative retention time) 1.15 at higher Grignard molar equivalent load (1,4 molar equivalents), while at lower loading (1,2 molar equivalents) the effect of the temperature is negligible.

The analysis indicated the molar equivalents of Turbo Grignard as the main driver of the formation of ketone-impurity having RRT (relative retention time) 1.15. Secondly, the temperature at which the turbo Grignard is added and the volume of toluene appeared as (less) significant parameters. Furthermore, running the Grignard formation reaction at the molar equivalent range of 1.15-1.25 turbo Grignard load leads to a reduction of iPr-ketone impurity with respect to higher amounts.

### Example 4 - Synthesis and characterization of ketone-impurity

The ketone-impurity structure was firstly reported based on NMR characterization experiment on an enriched impurity sample. The impurity was recovered from DBBN crystallization mother liquors after chromatographic purification. The proposed structure of iPR-Ketone DBBN (formula IIa) was the following:

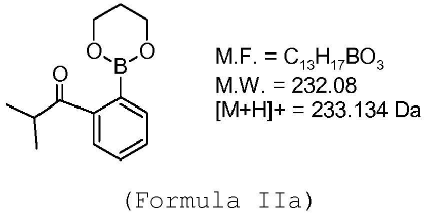

The following scheme depicts the strategy pursued to prepare the ketone-impurity.

### Synthesis pathway (3-steps)

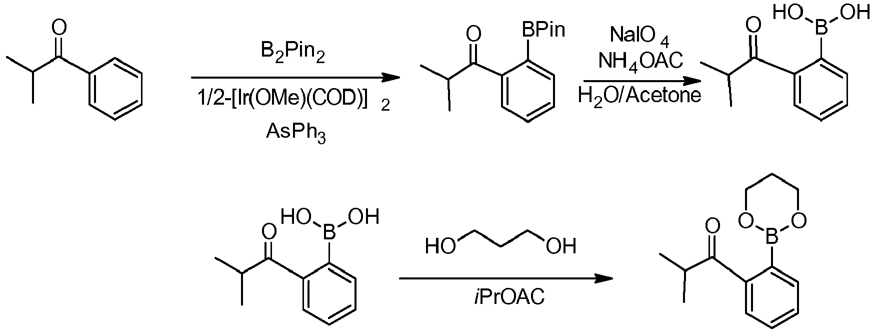

The Ortho-selective borylation with bis(pinacolato)diboron was followed by treatment with sodium periodate in ammonium acetate afforded the boronic acid derivative. In the last stage, the boronic acid was reacted with 1,3-propanediol in IPAC to produce the impurity DBBN iPr-ketone. After chromatographic purification, the impurity was recovered as a dark yellow oily substance.

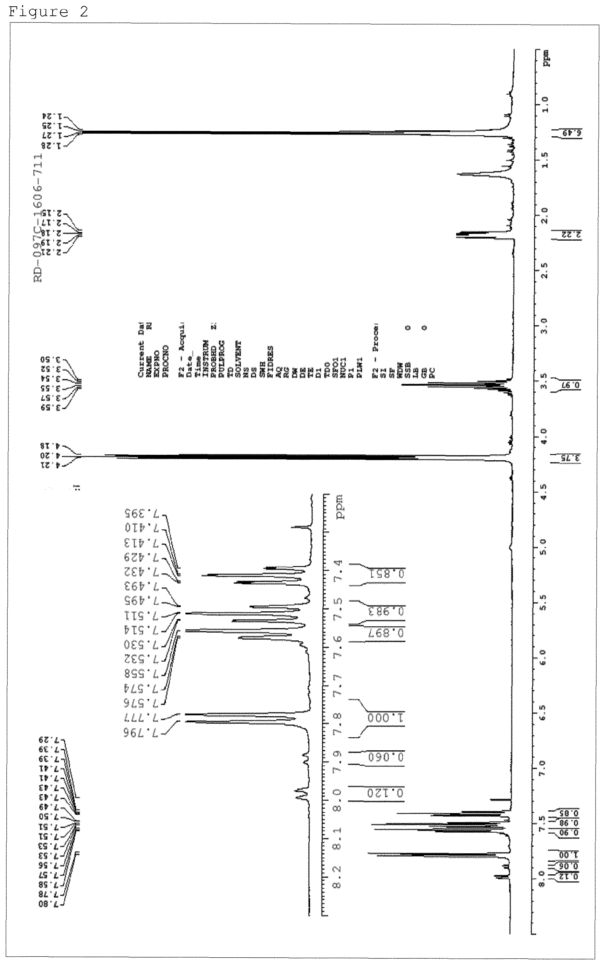

The impurity was checked by NMR and HPLC in comparison with previously obtained data (Figure 2). This confirmed that the ketone-impurity was actually the unknown impurity which had been postulated.

A detailed description of the process to prepare the impurity is reported as follows.

### First step - preparation of 2-(etanodioxyborolan)isobutysophenone

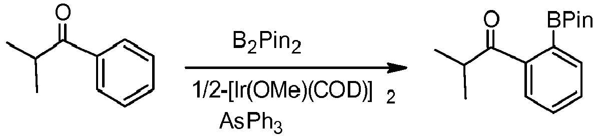

A flask containing 1/2[Ir(OMe) (COD)]2 (0,33 g, 0,59 mmol), AsPh3 (0,72 g, 2,35 mmol), and B2pin2 (10 g, 39 mmol) was charged with octane (236 mL) and isobutyrophenone (29 g, 197 mmol) under nitrogen low flow. The mixture was heated with stirring at 120°C for 16 h. The organic phase was filtered to remove the catalyst and the solvent was evaporated under vacuum. The reaction intermediate was purified by column chromatography (mobile phase N-Heptane/EtOAc 95/5) to obtain 3,8 g of the title intermediate (20,5 % molar yield).
1H NMR (400 MHz, CDCl3) : δ 7,78 (d, 1H), 7,58 (d, 1H), 7,52 (t, 1H), 7,43 (t, 1H), 3,50 (m, 1H), 1,44 (m, 12H), 1,25 (d, 6H)

### Second step - preparation of 2-(2-methylpropanoyl)phenylboronic acid

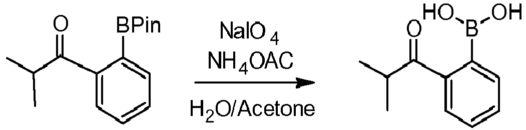

The reaction intermediate obtained in the previous step (2,8 g, 10,20 mmol) was dissolved in acetone/water (100 mL, 1:1). NaI04 (23 g, 107 mmol) and NH4OAC (6 g, 78 mmol) were added to the solution and the mixture was stirred at room temperature for 22 h. The acetone was eliminated in vacuo (Tjmax=40°C) and the residual water layer was filtered. The crude boronic acid was extracted from the filtrated water layer with isopropylacetate (x2) and purified by column chromatography (mobile phase n-Heptane/EtOAc 6/4) to obtain 400 mg of the title compound (20,4% molar yield).
1H NMR (400 MHz, DMSO): δ 7,77 (d, 1H), 7,51 (t, 1H), 7,46 (d, 1H), 7,41 (t, 1H), 3,59 (m, 1H), 1,12 (d, 6H)

### Step 3 - Preparation of 2-(1,3,2-dioxaborinane-2-yl)isobutyrophenone

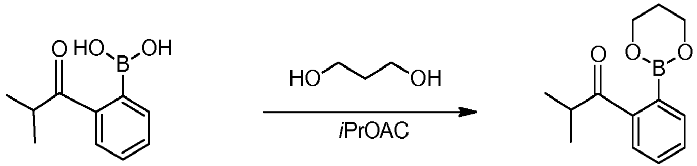

400 mg (3,30 mmol) of boronic acid obtained in previous step were dissolved in isopropyl acetate (3,5 mL). 1,3-propandiol (275mg, 3,6 mmol) was added to the solution and the mixture was stirred at room temperature for 2 h. Isopropyl acetate was removed under vacuum with heating (t_{Jmax}=40°C). The residue was diluted with DCM and extracted twice with water. The organic phase was dried over Na2SO4 and the solvent was removed affording 280 mg of the title compound as a dark yellow oily product (57,9% molar yield).
1H NMR (400 MHz, CDCl3): δ 7,75 (d, 1H), 7,37 (t, 1H), 7,52 (d, 1H), 7,48 (t, 1H), 4,16 (t, 4H), 3,5 (m, 1H), 2,15 (m, 2H), 1,23 (d, 6H) (see Figure 2).

The impurity structure was confirmed by synthesis, purification and NMR/HPLC data.

## Claims

1. Process for the preparation of an ester of 2-cyanophenylboronic acid of formula (II): 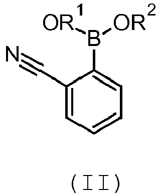 wherein R1 and R2 are independently linear or branched C1-C6 alkyl groups or are joined to form a cycle containing between 1 and 6 possibly substituted carbon atoms,
wherein the amount of ketone-impurity of formula (Ia) 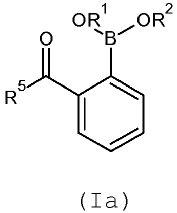 in the compound of formula (II) is lower than about 1.0 percent weight on weight compared to the compound of formula (II) or a salt thereof and wherein
R1 and R2 are independently linear or branched C1-C6 alkyl groups or are combined to form a cycle comprising between 1 and 6 possibly substituted carbon atoms and
R5 is selected from C1-C4 alkyl group;
comprising the following steps:
(a) conversion of a 2-halogenbenzonitrile of formula (IV) : 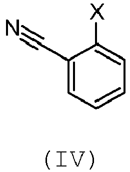 wherein X is selected from chlorine, bromide and iodine, in a 2-cyanophenyl magnesium halide lithium chloride complex of formula (III): 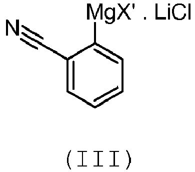 wherein X' is selected from chlorine, bromine and iodine and wherein said step a) is carried out by means of a lithium chloride complex Grignard reagent of formula
R5MgX'LiCl
wherein R5 is selected from C1-C4 alkyl and X' is selected from chlorine, bromine and iodine,
(b) conversion of the compound obtained in step (a) to give the compound of formula (II);
**characterized in that** the amount of lithium chloride complex Grignard reagent is comprised among 1,15 and 1,25 molar equivalents.

2. Process according to claim 1, comprising the further conversion step (c1) of the compound obtained in step (b) in the 2-cyanophenylboronic acid of formula (I):

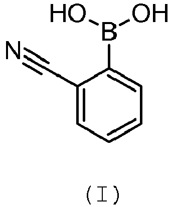

3. Process according to claim 1 or 2, wherein the prepared compound of formula (II) is the 2-(1,3,2-dioxaborinane-2-yl)benzonitrile of the following formula:

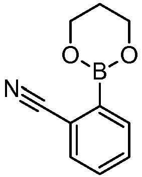

4. Process according to any one of the claims from 1 to 3, wherein the C1-C4 alkyl group of R5 is iso-propyl, t-butyl or sec-butyl.

5. Process according to any one of the claims from 1 to 4, wherein the lithium chloride complex Grignard reagent is selected from isopropylmagnesium chloride lithium chloride complex, t-butylmagnesium chloride lithium chloride complex or sec-butylmagnesium chloride lithium chloride complex.

6. Ketone-impurity of formula (Ia): 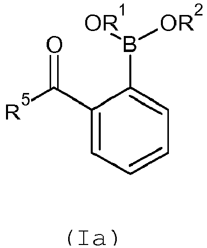
wherein, R1 and R2 are independently linear or branched C1-C6 alkyl groups or are combined to form a cycle comprising between 1 and 6 possibly substituted carbon atoms;
R5 is selected from C1-C4 alkyl.

7. Ketone impurity according to claim 8, wherein the C1-C4 alkyl group of R5 is iso-propyl, t-butyl or sec-butyl.

8. Ketone-impurity according to claim 6 or 7 having formula (IIa):

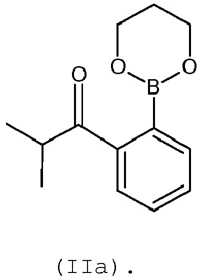

9. Process for the synthesis of a ketone-impurity of formula (Ia): 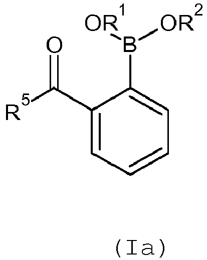 wherein
R1 and R2 are independently linear or branched C1-C6 alkyl groups or are combined to form a cycle comprising between 1 and 6 possibly substituted carbon atoms;
R5 is selected from C1-C4 alkyl;
said process comprising the steps of:
i) subjecting the compound of formula (IIIA): 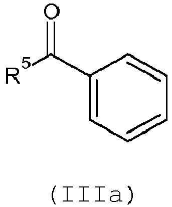 to an Orto-selective borylation to obtain a boronic acid derivative of formula (IVa): 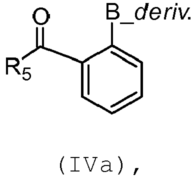 wherein *deriv.* is selected from pinacolate, (-) pinanediolate, hexylene glycolate, catecholate, neopentyl glycolate and dioxaborinane,
in the presence of at least one diboron compound and at least one metal-based catalyst selected from a Ir-, Rh- or Ru-based catalyst,
ii) hydrolyzing said boronic acid derivative of formula (IVa) to obtain a boronic acid of formula (Va): 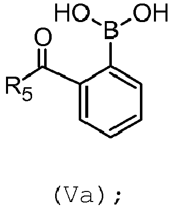
iii) subjecting the obtained boronic acid of formula (Va) to esterification thus obtaining the ketone-impurity of formula (la).

10. Process according to claim 9, wherein the ketone-impurity has formula (IIa):

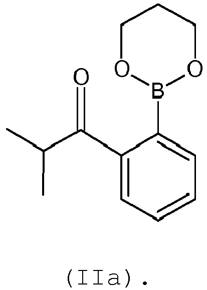

11. Process according to claim 11 or 12, wherein in step i), the Orto-selective borylation is carried out also in the presence of at least one arsine, preferably triphenylarsine, or phosphine.

12. Use of a ketone-impurity of formula (Ia): 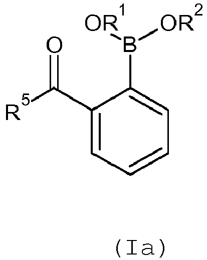 wherein,
R1 and R2 are independently linear or branched C1-C6 alkyl groups or are combined to form a cycle comprising between 1 and 6 possibly substituted carbon atoms;
R5 is selected from C1-C4 alkyl,
as reference standard or reference marker for detecting the presence of said impurity in the ester of 2-cyanophenylboronic acid of formula (II): 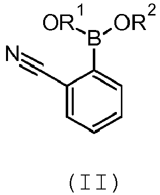 wherein R1 and R2 are independently linear or branched C1-C6 alkyl groups or are joined to form a cycle containing between 1 and 6 possibly substituted carbon atoms.

13. Use according to claim 12, wherein the ketone-impurity has formula (IIa):

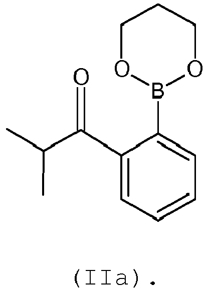

14. Composition comprising an ester of 2-cyanophenylboronic acid of formula (II): 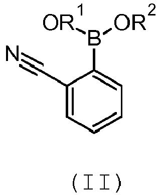 and a ketone-impurity of formula (Ia) 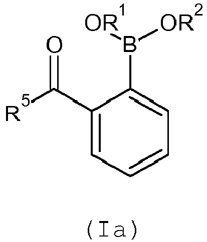 wherein the ketone-impurity is present in an amount lower than about 1.0 percent weight on weight compared to the compound of formula (II) or a salt thereof.

15. Composition according to claim 16, wherein the ketone-impurity has formula (IIa):

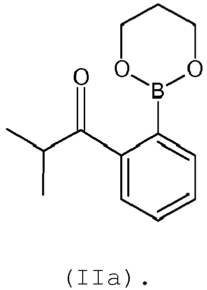

## Amended claims

### Amended claims in accordance with Rule 137(2) EPC.

1. Process for the preparation of an ester of 2-cyanophenylboronic acid of formula (II): 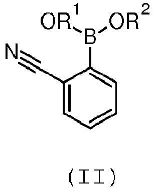 wherein R1 and R2 are independently linear or branched C1-C6 alkyl groups or are joined to form a cycle containing between 1 and 6 possibly substituted carbon atoms,
wherein the amount of ketone-impurity of formula (Ia) 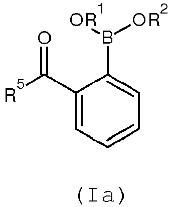 in the compound of formula (II) is lower than about 1.0 percent weight on weight compared to the compound of formula (II) or a salt thereof and wherein
R1 and R2 are independently linear or branched C1-C6 alkyl groups or are combined to form a cycle comprising between 1 and 6 possibly substituted carbon atoms and
R5 is selected from C1-C4 alkyl group;
comprising the following steps:
(a) conversion of a 2-halogenbenzonitrile of formula (IV) : 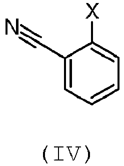 wherein X is selected from chlorine, bromide and iodine, in a 2-cyanophenyl magnesium halide lithium chloride complex of formula (III): 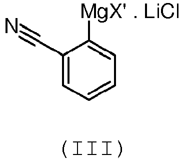 wherein X' is selected from chlorine, bromine and iodine and wherein said step a) is carried out by means of a lithium chloride complex Grignard reagent of formula
R5MgX'LiCl
wherein R5 is selected from C1-C4 alkyl and X' is selected from chlorine, bromine and iodine, and
wherein step a) is carried out within a range temperature comprised between -25°C and -15°C.
(b) conversion of the compound obtained in step (a) to give the compound of formula (II);
**characterized in that** the amount of lithium chloride complex Grignard reagent is comprised among 1,15 and 1,25 molar equivalents.

2. Process according to claim 1, comprising the further conversion step (c1) of the compound obtained in step (b) in the 2-cyanophenylboronic acid of formula (I):

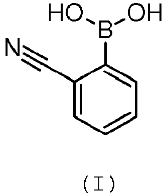

3. Process according to claim 1 or 2, wherein the prepared compound of formula (II) is the 2-(1,3,2-dioxaborinane-2-yl)benzonitrile of the following formula:

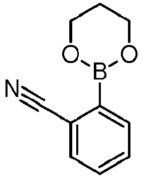

4. Process according to any one of the claims from 1 to 3, wherein the C1-C4 alkyl group of R5 is iso-propyl, t-butyl or sec-butyl.

5. Process according to any one of the claims from 1 to 4, wherein the lithium chloride complex Grignard reagent is selected from isopropylmagnesium chloride lithium chloride complex, t-butylmagnesium chloride lithium chloride complex or sec-butylmagnesium chloride lithium chloride complex.
